Europäisches Patentamt

European Patent Office

Office européen des brevets

(11) Publication number: **0 348 703**
**A2**

## EUROPEAN PATENT APPLICATION

(21) Application number: **89110318.6**

(22) Date of filing: **07.06.89**

(51) Int. Cl.⁴: **G06F 15/62**

(30) Priority: **09.06.88 JP 142005/88**

(43) Date of publication of application:
**03.01.90 Bulletin 90/01**

(84) Designated Contracting States:
**BE DE FR GB IT NL SE**

(71) Applicant: **EZEL INC.**
**2-22-2 Koishikawa**
**Bunkyo-ku Tokyo 112(JP)**

(72) Inventor: **Kumagai, Ryohei Ezel Inc.**
**Nihonseimei Yotsuya Bldg**
**16-2 Samon-cho**
**Shinjuku-ku Tokyo 160(JP)**

(74) Representative: **Patentanwälte Grünecker,**
**Kinkeldey, Stockmair & Partner**
**Maximilianstrasse 58**
**D-8000 München 22(DE)**

(54) **Image processing method.**

(57) An image processing method for expansion comprising steps:
calculating the maximum value of density of pixels in each of predetermined convolution of an image; and giving the maximum value to pixel to be processed in the convolution.

Fig. 1

| a | b | c |
|---|---|---|
| d | e | f |
| g | h | i |

EP 0 348 703 A2

# IMAGE PROCESSING METHOD

## FIELD OF THE INVENTION

The present invention relates to an image processing method particularly to an image processing method effective for expansion and contraction of an image.

## BACKGROUND OF THE INVENTION

Expansion and contraction are effective for removing small irregularities such as concavities and convexities around figures. Conventionally decisions is necessary for such processing, if the pixel is a boundary one or not as well as if it is a background pixel touching to a boundary pixel or not. As to an image of pixels of 512x512, 260,000 times decision is necessary.

## SUMMARY OF THE INVENTION

The present invention has an object to provide an image processing method effective for expansion ans contraction.

An image processing method according to the present invention performs expansion and contraction in 4-neighborhood and 8-neighborhood using Min or Max calculation.

## BRIEF DESCRIPTION OF THE DRAWINGS

Fig. 1 shows an image to be processed;

Fig. 2 shows the process result of the image in Fig. 1;

Fig. 3 shows an image to be expanded;

· Fig. 4 shows the expansion result of the image in Fig. 3.

## DETAILED DESCRIPTION OF THE PREFERRED EMBODIMENT

Exemplary preferred embodiments of the image processing method according to the present invention will be described in detail hereinafter.

Theoretically, the condition for eliminating pixels in a convolution in contraction processing of 4-neighborhood is that the center pixel is a pixel of a configuration and there is a background pixel in 4-neighborhood. This evaluation is rather heavy load for one ALU (arithmetic and logical unit).

Re-examinations about the process of expansion and contraction is described below with referring to the attached drawings.

<Contraction>

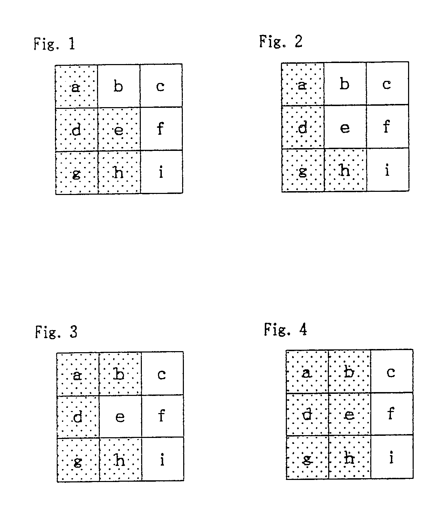

In Fig. 1, since central pixel e is "1" and the peripheral pixels b and f are "0" in 3x3 convolution, central pixel e is to be converted into "0" when contraction is performed.

That is;

when $e = 1$ and $(b + d + f + h) = 1$, $e \rightarrow 0$    (1)

when $e = 0$ and whatever the values of b, d, f and h, $e \rightarrow 0$    (2)

By combining conditions (1) and (2), and defining $e'$ as the value of e after converted, the value of $e'$ is:

$e' = e(b \times d \times f \times h)$    (3)

Introducing an operator of minimum, formula (3) is rewritten as follows;

$e' = \mathrm{Min}\{b,d,e,f,h\}$    (4)

Namely, the process of contraction is completed only by giving the minimum among the central pixel and the 4-neighborhood (when 8-neighborhood is being processed, give the minimum among the center pixel and 8-neighborhood).

This minimum calculation can be practiced easily by ordinal ALU or a combination of them.

Fig. 2 shows the contraction result of the image in Fig. 1.

At the process of 8-neighborhood:

when $e = 1$ and $(\overline{a} + \overline{b} + \overline{c} + \overline{d} + \overline{f} + \overline{g} + \overline{h} + \overline{i}) = 1$, $e \rightarrow 0$    (5)

when $e = 0$ and whatever the values of a, b, c, d, f, g, h and i, $e \rightarrow 0$    (6)

Giving the same concept as the before one, (5) and (6) become (7).

$e' = e(a \times b \times c \times d \times f \times g \times h \times i)$    (7)

By combining these condition, a formula is given as follows by introducing an operation MIN.

$e' = \mathrm{Min}\{a,b,c,d,f,g,h,i\}$    (8)

<Expansion>

As to the process of expansion, the conditions and logic formulas corresponding to (1) to (8) are as follows.

-- 4-neighborhood --

When $e = 0$ and $(b + d + f + h) = 1$, $e \to 1$    (1)'
when $e = 1$ and whatever the values of b, d, f and h,
$e \to 1$    (2)'
$e' = e + (b + d + f + h)$    (3)'
$e = \text{Max}\{b,d,e,f,h\}$    (4)'

-- 8-neighborhood --

When $e = 0$ and $(a + b + c + d + f + g + h + i) = 1$, $e \to 1$    (5)'
when $e = 1$ and whatever the values of a, b, c, d, f, g, h and i    $e \to 1$    (6)'
$e' = e + (a + b + c + d + f + g + h + i)$    (7)'
$e' = \text{Max}\{a,b,c,d,e,f,g,h,i\}$    (8)'

Fig. 4 shows the result after performing such process of expansion to Fig. 3.

Although only a few exemplary embodiments of this invention have been described in detail above, those skilled in the art will readily appreciate that many modifications are possible in the exemplary embodiments without materially departing from the novel teachings and advantages of this invention.

Accordingly, all such modification are intended to be included within the scope of this invention as defined in the following claims.

## Claims

(1) An image processing method for expansion comprising steps:
calculating the maximum value of density of pixels in each of predetermined convolution of an image; and
giving said maximum value to a pixel to be processed in said convolution.

(2) An image processing method for contraction comprising steps:
calculating the minimum value of density of pixels in each of predetermined convolution of an image; and
giving said minimum value to a pixel to be processed in said convolution.

(3) An image processing method according to Claim 1 and 2, wherein said convolution consists of 3x3 pixels.

Fig. 1

Fig. 2

Fig. 3

Fig. 4